# EUROPÄISCHE PATENTANMELDUNG

(11) **EP 1 001 638 A2**
(43) Veröffentlichungstag der Anmeldung: **17.05.2000**
(21) Anmeldenummer: 99122763.8
(22) Anmeldetag: 16.11.1999
(51) Int. Cl.: H04Q 7/26

(54) **Telefonvermittlungssystem**

(30) Priorität: 16.11.1998 DE 19852774
(71) Anmelder: SIEMENS AKTIENGESELLSCHAFT, 80333 München (DE)
(72) Erfinder: Rau, Helmut, 82110 Germering (DE); Klotz, Udo, 82061 Neuried (DE); Egger, Franz, 81545 München (DE); Schneider, Bernd, 81479 München (DE)

(57) **Zusammenfassung**

Telefonvermittlungssystem zur Vermittlung von CENTREX(CTX)-Rufen zwischen CTX-Teilnehmern, wobei die CTX-Teilnehmer mobile Teilnehmer (1) und verdrahtete Teilnehmer (8) umfassen können. Zwischen der den mobilen Teilnehmern (1) zugeordneten Mobilvermittlungsstelle (3) und der den verdrahteten CTX-Teilnehmern (8) zugeordneten Festnetzvermittlungsstelle (15) wird eine Nachrichtenschnittstelle zur Übertragung von CTX-spezifischen Informationen eingerichtet und die Steuerung der Mobilvermittlungsstelle (3) wird um einen Steueranteil (16) für die CTX-spezifische Mobilrufverarbeitung ergänzt.

## Beschreibung

Die vorliegende Erfindung betrifft ein Telefonvermittlungssystem, insbesondere ein sogenanntes CENTREX (CTX)-Telefonvermittlungssystem, bei dem zwischen definierten CTX-Teilnehmern CTX-Verbindungen bzw. CTX-Rufe aufgebaut werden können.

Bei CENTREX-Systemen handelt es sich um eine rein softwaremäßig implementierte Lösung zur Realisierung von Nebenstellenanlagen, welche an das öffentliche Telefonnetz anzuschließen sind. Dabei können innerhalb jeder Festnetzvermittlungsstelle (local exchange LE) des öffentlichen Telefonnetzes (public switched telephone network, PSTN) sogenannte CENTREX-Gruppen bzw. CTX-Gruppen gebildet werden, um auf diese Weise einen Ersatz für hardwaremäßig realisierte Nebenstellenanlagen (private branch exchange, PBX) zu schaffen. Der Vorteil dieser softwaremäßigen CTX-Lösung besteht darin, daß zur Realisierung von Nebenstellenanlagen bisher verwendete TelefonEndgeräte weiterhin verwendet werden können und eine flexible Anpassung bzw. Modifizierung der einzelnen CTX-Gruppen möglich ist. Die nachfolgend der Einfachheit halber als CTX-Teilnehmer bezeichneten Teilnehmer einer CTX-Gruppe sind direkt an die jeweilige Vermittlungsstelle angeschlossen, haben jedoch das Gefühl zu einem privaten Netz zu gehören.

Den CTX-Teilnehmern einer CTX-Gruppe werden bestimmte CTX-Funktionen für den Aufbau von CTX-Verbindungen bzw. die Vermittlung von CTX-Rufen angeboten, welche im wesentlichen ähnlich zu denjenigen Funktionen sind, die ein an einer hardwaremäßig realisierten Nebenstellenanlage angeschlossener Teilnehmer gewohnt ist. Diese CTX-Funktionen können beispielsweise einen privaten Rufnummernplan für die CTX-Teilnehmer, die Anwahl eines Operators, die Rufumleitung, die Anrufweitergabe oder den Ausstiegscode für den Ausstieg in das öffentliche Netz usw. umfassen. Darüber hinaus sind zusätzlich zu den üblichen Funktionen oder Merkmalen CTX-Ergänzungen denkbar, wie z.B. die Rufumleitung, abhängig davon, ob ein Anruf gruppenintern ist oder von außerhalb der Gruppe kommt oder Verkehrseinschränkungen z.B. Sperren für Rufe vom oder in das öffentliche Telefonnetz.

Die CTX-Gruppen mehrerer Vermittlungsstellen können ein übergreifendes CTX-Privatnetz bilden. Für die Steuerung der angebotenen CTX-Funktionen wird eine erweiterte ISUP-Signalisierung zwischen den betroffenen Vermittlungsstellen verwendet, um somit Steuerinformationen, wie z.B. die Anrufart oder sonstige Merkmals- oder Funktionsindikatoren, wie z.B. Sperren, übertragen zu können.

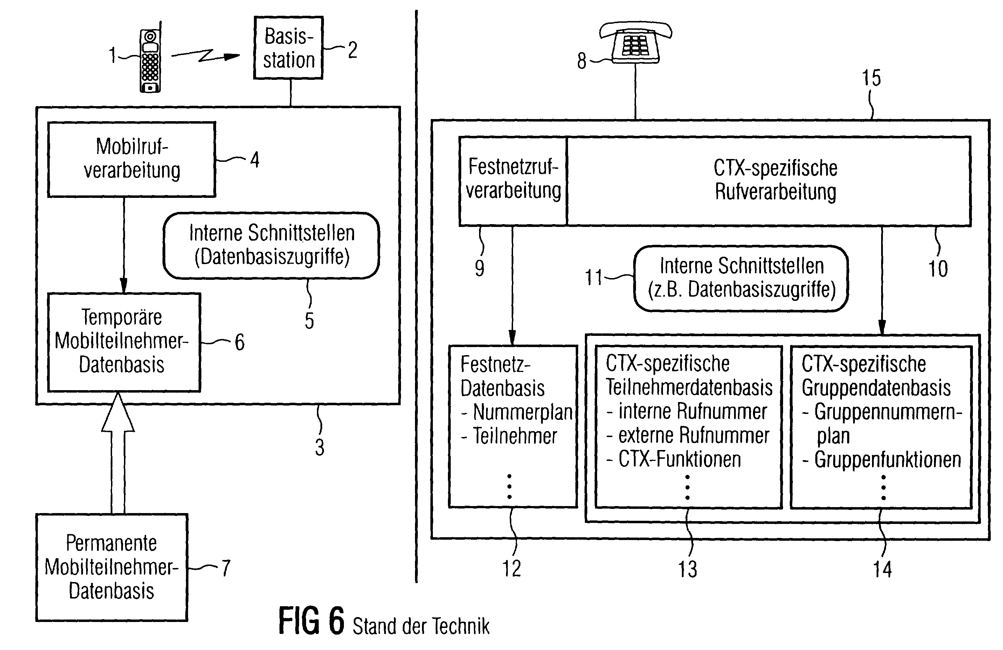

Im rechten Abschnitt von Fig. 6 ist ein vereinfachtes Blockschaltbild einer bekannten Realisierung eines CTX-Systems dargestellt.

Insbesondere ist in Fig. 6 eine Festnetzvermittlungsstelle 15 dargestellt, an die ein verdrahteter oder stationärer CTX-Teilnehmer 8 angeschlossen ist. In einer Datenbank sind sämtliche zur CTX-Rufverarbeitung erforderlichen Informationen abgelegt. Diese Datenbank umfaßt eine CTX-spezifische Teilnehmerdatenbasis 13 sowie eine CTX-spezifische Gruppendatenbasis 14. In der CTX-spezifischen Teilnehmerdatenbasis sind Informationen über die CTX-Teilnehmer, wie z.B. interne Rufnummern, externe/öffentliche Rufnummern oder für die jeweiligen CTX-Teilnehmer zur Verfügung stehende bzw. nutzbare CTX-Funktionen abgelegt. In der CTX-spezifischen Gruppendatenbasis 14 sind Informationen über die einzelnen CTX-Gruppen gespeichert, so daß diese CTX-spezifische Gruppendatenbasis unter anderem einen Gruppennummernplan oder vorgegebene Gruppenfunktionen, welche für die Teilnehmer der jeweiligen CTX-Gruppen zur Verfügung stehen abgelegt sind. Darüber hinaus ist eine herkömmliche Datenbasis 12 vorgesehen, in der die üblichen Festnetzinformationen, welche zur Rufvermittlung über die jeweilige Vermittlungsstelle 15 erforderlich sind, abgelegt sind. Diese Datenbasis 12 umfaßt somit allgemein öffentliche Daten, wie z.B. einen Nummernplan oder ein Verzeichnis der angeschlossenen Teilnehmer. Zur Verarbeitung von über die Vermittlungsstelle 15 zu vermittelnden Rufen ist eine Steuerung 9 vorgesehen, die um eine Steuereinheit 10 zur CTX-spezifischen Rufverarbeitung erweitert ist. Diese Steuerung greift über interne Schnittstellen 11 auf die Datenbasen 12 - 14 zu, um abhängig von den in der jeweiligen Datenbasis gespeicherten Informationen Verbindungen aufzubauen bzw. Anrufe vermitteln zu können. Insbesondere greift die CTX-Steuereinheit 10 auf die beiden CTX-spezifischen Datenbasen 13, 14 zu und ist ausschließlich für die Verarbeitung von CTX-Rufen verantwortlich.

Im linken Abschnitt von Fig. 6 ist ein vereinfachtes Blockschaltbild eines herkömmlichen Mobilfunksystems dargestellt. Ein Mobilfunk-Endgerät 1 kommuniziert mit einer Mobilfunk-Basisstation 2 (base station BS), welche einer Mobilvermittlungsstelle (mobile switching center MSC) 3 eines öffentlichen Mobilfunknetzes (public land mobile network PLMN) zugewiesen ist. Die Mobilvermittlungsstelle 3 umfaßt eine Steuerung 4 zur Verarbeitung von Mobilfunkverbindungen mit dem mobilen Endgerät 1. Diese Steuerung 4 greift über interne Schnittstellen 5 auf eine temporäre Datenbasis 6 zu, in der Informationen über Mobilteilnehmer abgelegt sind. Diese Datenbasis umfaßt insbesondere die sogenannte Besucherdatei (visitor location register VLR) der Mobilvermittlungsstelle 3, welche beispielsweise in GSM-Mobilfunknetzen zur Unterstützung der Teilnehmermobilität verwendet wird. Darüber hinaus ist eine permanente Datenbasis 7 vorgesehen, welche ebenfalls Informationen der Mobilteilnehmer speichert und insbesondere die sogenannte Heimatdatei (home location register HLR) in GSM-Mobilfunknetzen umfaßt. Die Besucherdatei ist mit der Heimatdatei der Mobilvermittlungsstelle 3 gekoppelt, um den augenblicklichen Aufenthaltsort eines Mobilteilnehmers eindeutig bestimmen zu können. So ist jedem Mobilteilnehmer 1 eine Heimatdatei zugewiesen, in der er registriert ist. Befindet sich jedoch der Teilnehmer 1 außerhalb des Zuständigkeitsbereichs der ihm zugeordneten Mobilvermittlungsstelle 3, was beispielsweise bei einem Aufenthalt im Ausland der Fall ist, wird nach der ersten Kontaktaufnahme des entsprechenden mobilen Endgeräts 1 mit der der Mobilvermittlungsstelle 3 zugeordneten Basisstation 2 festgestellt, daß der entsprechende Mobilteilnehmer nicht als Teilnehmer der Mobilvermittlungsstelle 3 registriert ist und daraufhin über das Festnetz die dem Mobilteilnehmer 1 ursprünglich zugeordnete Mobilvermittlungsstelle mit der entsprechenden Heimatdatei darüber informiert, daß sich der Mobilteilnehmer zur Zeit im Bereich der neuen Mobilvermittlungsstelle aufhält. In der Besucherdatei der neuen Mobilvermittlungsstelle werden unter anderem Informationen gespeichert, die zur Verschlüsselung notwendig sind. Wird nun der sich außerhalb des Zuständigkeitsbereichs seiner Mobilvermittlungsstelle befindliche Mobilteilnehmer 1 angerufen, wird anhand des Eintrags in seiner Heimatdatei festgestellt, daß sich der gerufene Mobilteilnehmer im Bereich der neuen Mobilvermittlungsstelle befindet und die Verbindung dorthin durchgeschaltet.

Aus der Darstellung von Fig. 6 ist insbesondere ersichtlich, daß für Mobilteilnehmer 1 und CTX-Teilnehmer 8 bisher völlig getrennte Abläufe zur Rufverarbeitung sowie Datenbasen vorgesehen sind. Zwischen dem auf der linken Seite dargestellten Mobilfunknetz und dem auf der rechten Seite dargestellten Festnetz mit CTX-Teilnehmern, besteht eine Trennwand, die bisher noch nicht zufriedenstellend überwunden ist, da Mobilteilnehmer nicht an eine bestimmte Vermittlungsstelle gebunden sind, so daß die auf Vermittlungsstellen basierende CTX-Lösung für stationäre CTX-Teilnehmer nicht ohne weiteres auf mobile CTX-Teilnehmer übertragen werden kann.

Es sind zwar auf dem Bereich von intelligenten Netzen (intelligent network IN) Lösungen bekannt, die verdrahtete bzw. stationäre Teilnehmer mit mobilen Teilnehmern kombinieren, wobei jedoch mit den Mitteln derartiger intelligenter Netze CTX-Funktionen nur teilweise nachgebildet werden können, d.h. eine vollständige Nutzung des gesamten CTX-Funktionsumfangs, wie z.B. insbesondere die Abrechnung nach reduzierten Gebührensätzen für private Netze, ist nicht möglich. Darüber hinaus ist bei derartigen IN-Lösungen eine relativ aufwendige Anpassung des zentralen als "service control point" (SCP) bezeichneten zentralen IN-Netzelements sowie eine Administrierung der einzelnen Teilnehmer in den Vermittlungsstellen und diesem zentralen IN-Netzelement erforderlich.

Desweiteren ist es bereits bekannt, Anrufe von einer CTX-Vermittlungsstelle, d.h. in Fig. 6 von der Vermittlungsstelle 15, in das öffentliche Mobilfunknetz (PLMN) weiterzuleiten. Der Nachteil dieses Verfahrens besteht jedoch darin, daß dies ausschließlich die Anrufweiterleitung in das öffentliche Mobilfunknetz und nicht zusätzlich auch den Aufbau von Verbindungen in entgegengesetzter Richtung betrifft. Dieses System ist nur für die ankommende Erreichbarkeit unter der gruppeninternen Rufnummer anwendbar und hat eine ungünstige Rufweiterleitung (routing) zur Folge.

Aus der obigen Beschreibung folgt, daß es bisher noch nicht möglich ist, mobile Teilnehmer zufriedenstellend in eine CTX-Gruppe bzw. in ein CTX-Privatnetz einzubinden.

Der vorliegenden Erfindung liegt daher die Aufgabe zugrunde, eine Möglichkeit zu schaffen, um auch mobile Teilnehmer in CTX-Systeme einbinden zu können, wobei insbesondere die vermittlungsstellenbasierte CTX-Lösung für stationäre CTX-Teilnehmer weiterverwendet werden kann.

Diese Aufgabe wird gemäß der vorliegenden Erfindung durch ein Telefonvermittlungssystem mit den Merkmalen des Anspruchs 1 gelöst. Die Unteransprüche beschreiben bevorzugte und vorteilhafte Ausgestaltungen der vorliegenden Erfindung.

Gemäß der vorliegenden Erfindung wird zwischen der Mobilvermittlungsstelle des öffentlichen Mobilfunknetzes und der CTX-Festnetzvermittlungsstelle des öffentlichen Telefonnetzes eine Nachrichtenschnittstelle zur Übertragung von CTX-spezifischen Informationen eingerichtet, so daß die CTX-spezifischen Datenbasen der CTX-Festnetzvermittlungsstelle nach außen für die Mobilvermittlungsstelle zugänglich gemacht werden. Darüber hinaus wird die Steuerung der Mobilfunkvermittlungsstelle, welche zur Mobilrufverarbeitung vorgesehen ist, um eine CTX-spezifische Steuerung ergänzt, welche zur CTX-spezifischen Mobilrufverarbeitung vorgesehen ist. Diese CTX-spezifische Steuerung der Mobilvermittlungsstelle kann beispielsweise über die zuvor erwähnte Nachrichtenschnittstelle CTX-spezifische Informationen von der CTX-Festnetzvermittlungsstelle angefordert werden, welche anschließend für den Aufbau einer CTX-Verbindung zwischen einem mobilen CTX-Teilnehmer und einem weiteren CTX-Teilnehmer der entsprechenden CTX-Gruppe verwendet werden. Diese CTX-Informationen können sowohl begleitend zu einer Verbindungssteuerung als auch begleitend zu einer Aufenthaltsregistrierung für den entsprechenden mobilen CTX-Teilnehmer angefordert und übertragen werden.

Gemäß einem Ausführungsbeispiel der vorliegenden Erfindung wird der VLR-Anteil der Mobilvermittlungsstelle des öffentlichen Mobilfunknetzes, d.h. die Besucherdatei der Mobilvermittlungsstelle, um die Möglichkeit ergänzt, CTX-spezifische Daten aufzunehmen bzw. zu speichern. Dieser VLR-Anteil dient somit als temporäre CTX-spezifische Mobilteilnehmer-Daten-basis, so daß der Zugriff auf die für die Mobilvermittlungsstelle relevanten CTX-spezifischen Daten beschleunigt werden kann. Die Aufnahme der Daten in den VLR-Anteil kann ebenfalls begleitend zur Aufenthaltsregistrierung an einer neuen Mobilvermittlungsstelle folgen.

Desweiteren kann auch der HLR-Anteil des öffentlichen Mobilfunknetzes, d.h. die Heimatdatei der Mobilvermittlungsstelle, um Daten ergänzt werden, welche die Zugehörigkeit eines mobilen CTX-Teilnehmers zu einer CTX-Gruppe kennzeichnen. Der HLR-Anteil dient somit in diesem Fall als permanente CTX-spezifische Mobilteilnehmer-Datenbasis, wobei die darin abgelegten Daten als Trigger zum Starten der CTX-Aktivitäten und zur Adressierung der jeweils zuständigen CTX-Festvermittlungsstelle dienen. Zum Starten der CTX-Aktivitäten werden die in dem HLR-Anteil abgelegten CTX-spezifischen Daten der Mobilteilnehmer in den VLR-Anteil geladen, auf den die CTX-spezifische Steuerung der Mobilvermittlungsstelle zum Aufbau einer CTX-Verbindung zugreift.

In den Rufnummernplan von CTX-Gruppen lassen sich auch reale, d.h. hardwaremäßig realisierte Nebenstellenanlagen einbeziehen. Damit ist auch für Nebenstellenanlagenteilnehmer ein Internverkehr mit Mobilteilnehmern im gleichen CTX-Privatnetz möglich.

Der Vorteil der vorliegenden Erfindung beruht darin, daß Mobilteilnehmer einfach in CTX-Gruppen bzw. in ein CTX-Privatnetz eingegliedert werden können, wobei insbesondere die mobilen CTX-Teilnehmer hinsichtlich der Einrichtung der CTX-Gruppendaten und der CTX-Teilnehmerdaten weitgehend wie drahtgebundene CTX-Teilnehmer behandelt werden. Die CTX-spezifischen Datenbasen in den CTX-Festnetzvermittlungsstellen können weitgehend unverändert auch für mobile CTX-Teilnehmer verwendet werden. Im Gegensatz zu der eingangs beschriebenen Lösung mit Verwendung von intelligenten Netzen sind im vorliegenden Fall keine zusätzlichen Netzkomponenten, wie z.B. das SCP-Netzelement bei einem intelligenten Netz, in den beteiligten Netzen, d.h. in dem öffentlichen Mobilfunknetz (PLMN) und dem öffentlichen Festnetz (PSTN), erforderlich. Mit Hilfe der vorliegenden Erfindung kann die Vermittlung von CTX-Rufen, d.h. das Routing optimiert werden, da abgehende Verbindungen für mobile CTX-Teilnehmer nicht über die dem mobilen CTX-Teilnehmer zugeordnete CTX-Heimat-Vermittlungsstelle des Festnetzes geleitet werden muß. Bereits vorhandene Standards, wie z.B. TCAP (transaction control application part), SCCP (signalling connection control part) oder MTP (message transfer part), können weiterhin genutzt werden, wobei lediglich die Mobilfunkstandards beispielsweise hinsichtlich der Besucherdatei (visitor location register VLR) oder des MAP (mobile application part) geringfügig angepaßt werden müssen. Um den Durchsatz des erfindungsgemäßen Systems zu erhöhen, werden nur die tatsächlich erforderlichen CTX-spezifischen Daten über die zuvor beschriebene Nachrichtenschnittstelle in das öffentliche Mobilfunknetz bzw. zu der Mobilvermittlungsstelle übertragen. Diese relevanten CTX-spezifischen Daten werden in der Regel Merkmals- oder Funktionsindikatoren, welche die zur Verfügung stehenden CTX-Funktionen spezifizieren, sowie Adresseninformationen umfassen. Umfangreiche CTX-Gruppendaten, wie z.B. der CTX-Gruppennummernplan, brauchen hingegen nicht übertragen zu werden.

Die vorliegende Erfindung wird nachfolgend anhand bevorzugter Ausführungsbeispiele unter Bezugnahme auf die beigefügte Zeichnung näher beschrieben.
Fig. 1 zeigt ein vereinfachtes Blockschaltbild eines erfindungsgemäßen Telefonvermittlungssystems gemäß einem ersten Ausführungsbeispiel,
Fig. 2 zeigt ein vereinfachtes Blockschaltbild eines erfindungsgemäßen Telefonvermittlungssystems gemäß einem zweiten Ausführungsbeispiel,
Fig. 3 zeigt ein vereinfachtes Blockschaltbild eines erfindungsgemäßen Telefonvermittlungssystems gemäß einem dritten Ausführungsbeispiel,
Fig. 4 zeigt ein Ablaufdiagramm zur Verdeutlichung des Aufbaus einer CTX-Verbindung zwischen einem rufenden mobilen CTX-Teilnehmer und einem gerufenen und verdrahteten CTX-Teilnehmer,
Fig. 5 zeigt ein Ablaufdiagramm zur Verdeutlichung des Aufbaus einer CTX-Verbindung zwischen einem rufenden verdrahteten CTX-Teilnehmer und einem gerufenen mobilen CTX-Teilnehmer, und
Fig. 6 zeigt ein vereinfachtes Blockschaltbild eines CTX-Telefonvermittlungssystems gemäß dem Stand der Technik, wobei mobile Teilnehmer nicht in das CTX-Telefonvermittlungssytem eingebunden sind.

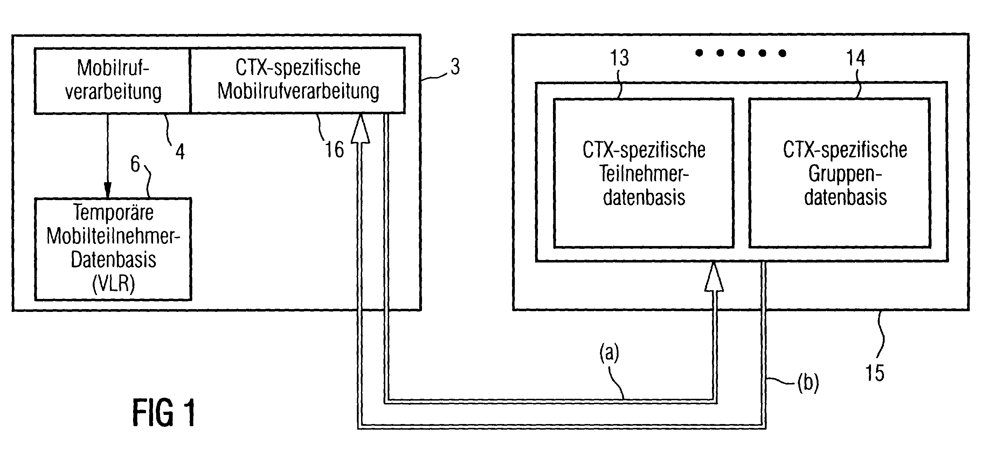

Das in Fig. 1 gezeigte Telefonvermittlungssystem umfaßt auf der Festnetzseite mindestens eine Festnetzvermittlungsstelle 15, welche im wesentlichen analog zu der in Fig. 6 gezeigten Festnetzvermittlungsstelle 15 aufgebaut ist. Der Einfachheit halber ist in Fig. 1 lediglich die CTX-spezifische Datenbasis dargestellt, welche in Übereinstimmung mit Fig. 6 einerseits eine CTX-spezifische Teilnehmerdatenbasis 13 und andererseits eine CTX-spezifische Gruppendatenbasis 14 umfaßt. Hinsichtlich des Aufbaus und der Funktionsweise der Festnetzvermittlungsstelle 15 sei ergänzend auf die Erklärungen zu Fig. 6 verwiesen.

Desweiteren ist in Fig. 1 eine Mobilvermittlungsstelle 3 dargestellt, an die in Übereinstimmung mit Fig. 6 über eine (in Fig. 1 nicht gezeigte) Basisstation ein oder mehrere Mobilteilnehmer angeschlossen sind. Analog zur Festnetzseite können auch auf der Mobilfunknetzseite mehrere Mobilvermittlungsstellen 3 vorgesehen sein. Bestimmte Teilnehmer der Mobilfunknetzseite und der Festnetzseite sind als CTX-Teilnehmer spezifiziert und in CTX-Gruppen zusammengeschlossen. D.h. gemäß der vorliegenden Erfindung können CTX-Gruppen sowohl verdrahtete, d.h. stationäre, CTX-Teilnehmer als auch mobile Teilnehmer umfassen. Die in Fig. 1 gezeigte Mobilvermittlungsstelle 3 umfaßt eine durch den VLR-Anteil der Mobilvermittlungsstelle 3 gebildete temporäre Mobilteilnehmer-Daten-basis, auf die die Steuerung 4 der Mobilvermittlungsstelle 3, welche zur Mobilrufverarbeitung vorgesehen ist, zugreift. Gemäß der vorliegenden Erfindung ist diese Steuerung durch eine CTX-spezifische Steuerung 16 erweitert, die für eine CTX-spezifische Mobilrufverarbeitung vorgesehen ist.

Wie in Fig. 1 gezeigt ist, ist zwischen der Mobilvermittlungsstelle 3 und der Festnetzvermittlungsstelle 15 eine Nachrichtenschnittstelle vorhanden, über die CTX-spezifische Informationen oder CTX-spezifische Daten übertragen werden können. Bei dem in Fig. 1 gezeigten Ausführungsbeispiel fordert die CTX-spezifische Steuerung 16 der Mobilvermittlungsstelle 3 bestimmte CTX-spezifische Daten von der Festnetzvermittlungsstelle 15 an (a), welche anschließend aus den CTX-spezifischen Datenbasen 13, 14 der Festnetzvermittlungsstelle 15 ausgelesen und über die Nachrichtenschnittstelle der CTX-spezifischen Steuerung 16 zugeführt werden (b), so daß die CTX-spezifische Steuerung 16 anschließend durch Zusammenwirken mit der (in Fig. 6 gezeigten) CTX-spezifischen Steuerung 10 der Festnetzvermittlungsstelle 15 CTX-Rufe zwischen einem der entsprechenden Mobilvermittlungsstelle 3 zugeordneten mobilen CTX-Teilnehmer und einem weiteren (mobilen oder verdrahteten) CTX-Teilnehmer vermitteln kann. Die von der Mobilvermittlungsstelle 3 angeforderten CTX-spezifischen Informationen können beispielsweise begleitend zur Verbindungssteuerung oder begleitend zu einer Aufenthaltsregistrierung für einen mobilen CTX-Teilnehmer angefordert und übertragen werden.

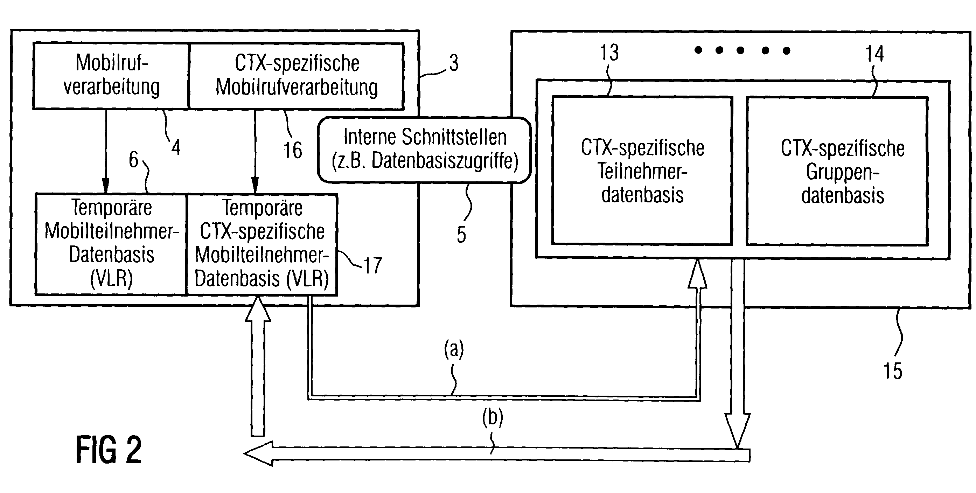

Das in Fig. 2 gezeigte Ausführungsbeispiel eines erfindungsgemäßen Telefonvermittlungssystems entspricht hinsichtlich seiner Funktionsweise im wesentlichen dem in Fig. 1 gezeigten Telefonvermittlungssystem jedoch mit der Ausnahme, daß der VLR-Anteil 6 der Mobilvermittlungsstelle 3 um eine Möglichkeit ergänzt ist, CTX-spezifische Daten aufzunehmen. D.h. in der Mobilvermittlungsstelle 3 ist eine temporäre CTX-spezifische Mobilteilnehmer-Datenbasis 17 ausgebildet, die insbesondere durch die Besucherdatei (VLR) der Mobilvermittlungsstelle 3 realisiert ist. In dieser temporären Datenbasis 17 werden die von der Festnetzvermittlungsstelle 15 angeforderten CTX-spezifischen Informationen zwischengespeichert, so daß anschließend die CTX-spezifische Steuerung 16 der Mobilvermittlungsstelle 3 (über interne Schnittstellen 5) darauf zugreifen kann. Die Aufnahme der CTX-spezifischen Informationen in der temporären CTX-spezifischen Mobilteilnehmer-Datenbasis 17 kann begleitend zur Aufenthaltsregistrierung an einer neuen Mobilvermittlungsstelle 3 erfolgen, d.h. die CTX-spezifischen Daten können in der temporären CTX-spezifischen Mobilteilnehmer-Datenbasis 17 gespeichert werden, wenn ein mobiler CTX-Teilnehmer in den Zuständigkeitsbereich einer neuen Mobilvermittlungsstelle 3 gelangt. Wie bei dem in Fig. 1 gezeigten Ausführungsbeispiel kann auch bei dem in Fig. 2 gezeigten Ausführungsbeispiel die von der Mobilvermittlungsstelle 3 an die Festnetzvermittlungsstelle 15 übermittelte CTX-Anfrage Indentifizierungsinformationen über den entsprechenden CTX-Teilnehmer sowie die ihm zugeordnete CTX-Gruppe und rufverwandte Informationen enthalten. Die von der Festnetzvermittlungsstelle 15 an die Mobilvermittlungsstelle 3 übermittelte Antwort kann Anrufartdaten und für den entsprechenden CTX-Teilnehmer bzw. die CTX-Gruppe oder die Anrufart zur Verfügung stehende CTX-Funktionen enthalten. Durch das Zwischenspeichern der von der Festnetzvermittlungsstelle 15 übertragenen CTX-spezifischen Informationen in der temporären CTX-spezifischen Mobilteilnehmer-Datenbasis 17 kann für die nachfolgende Vermittlung von CTX-Rufen der Zugriff auf die relevanten CTX-spezifischen innerhalb der Mobilvermittlungsstelle 3 beschleunigt werden.

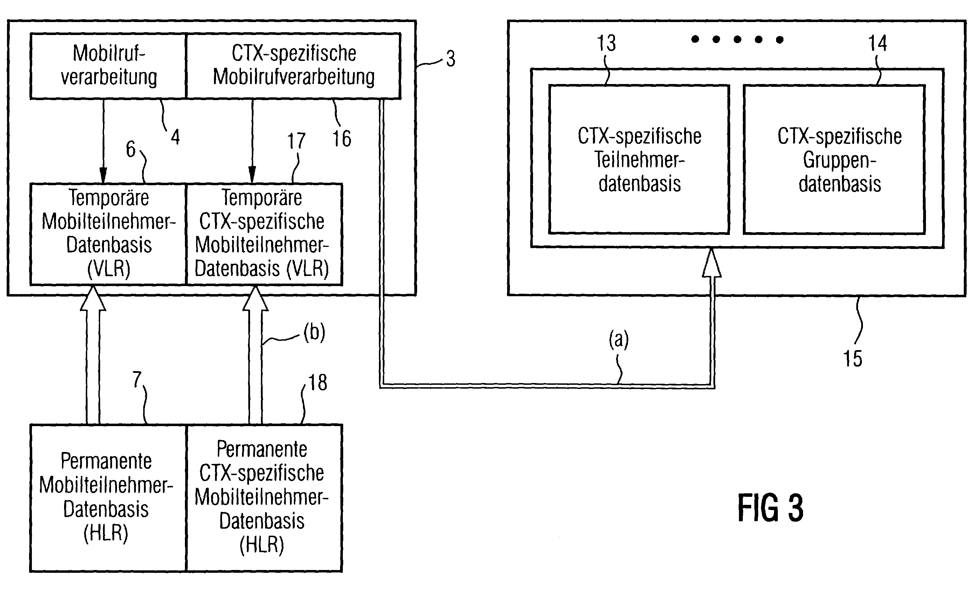

Bei dem in Fig. 3 gezeigten Ausführungsbeispiel ist zusätzlich zu dem in Fig. 2 gezeigten Telefonvermittlungssystem die permanente Mobilteilnehmer-Datenbasis 7 der Mobilvermittlungsstelle 3 um einen Anteil 18 ergänzt, der permanent CTX-spezifische Daten, welche beispielsweise die Zugehörigkeit eines mobilen CTX-Teilnehmers zu einer CTX-Gruppe kennzeichnen, speichert. In der permanenten Mobilteilnehmer-Datenbasis 7 sind gewöhnlicherweise die Daten der Heimatdatei sowie die zur Authentikation (authentication center AC) erforderlichen Daten gespeichert. Gemäß dem in Fig. 3 gezeigten Ausführungsbeispiel ist somit der HLR-Anteil 7 der Mobilvermittlungsstelle 3 durch einen CTX-spezifischen Anteil 18 ergänzt, in dem unter anderem Indentifizierungsinformationen für die mobilen CTX-Teilnehmer sowie für die CTX-Gruppen, denen die mobilen CTX-Teilnehmer zugeordnet sind, gespeichert sind. Desweiteren befinden sich in der CTX-spezifischen Datenbasis 18 Informationen über die Adressen der CTX-Festnetzvermittlungsstellen 15 usw. Die in der CTX-spezifischen Datenbasis 18 gespeicherten CTX-spezifischen Informationen werden beispielsweise begleitend zur Aufenthaltsregistrierung in die temporäre CTX-spezifische Mobilteilnehmer-Datenbasis (VLR-Anteil) 17 geladen. Durch Zugriff auf die dann in der temporären CTX-spezifischen Mobilteilnehmer-Datenbasis 17 gespeicherten Daten kann die CTX-spezifische Steuerung 16 an die Festnetzvermittlungsstelle 15 eine CTX-Mitteilung senden, die beispielsweise eine Routingadresse, d.h. die Adresse einer CTX-Festnetzvermittlungsstelle, und einer Datenbasisadresse mit der CTX-Gruppenidentifizierungsinformation und der internen Rufnummer umfassen kann.

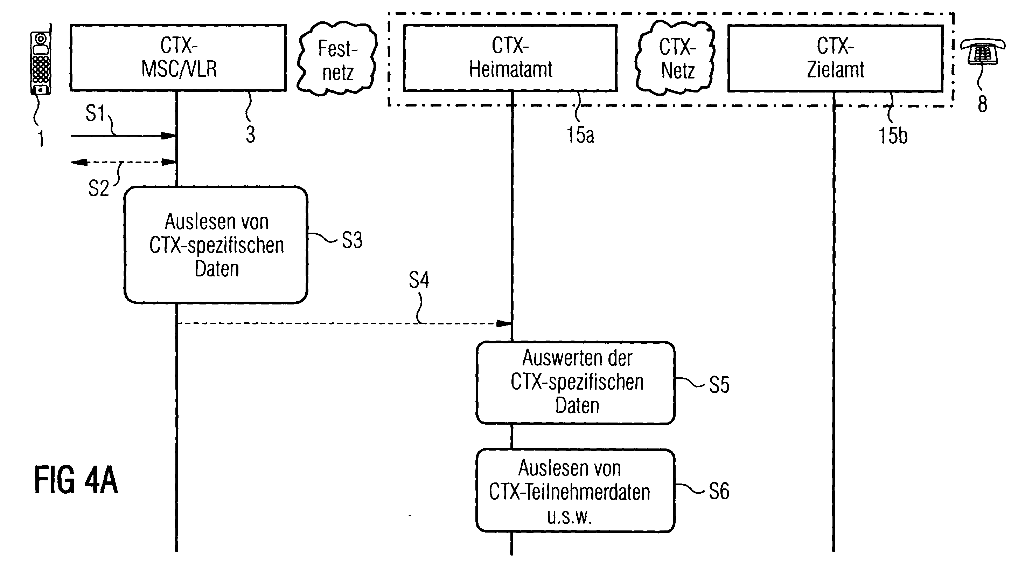

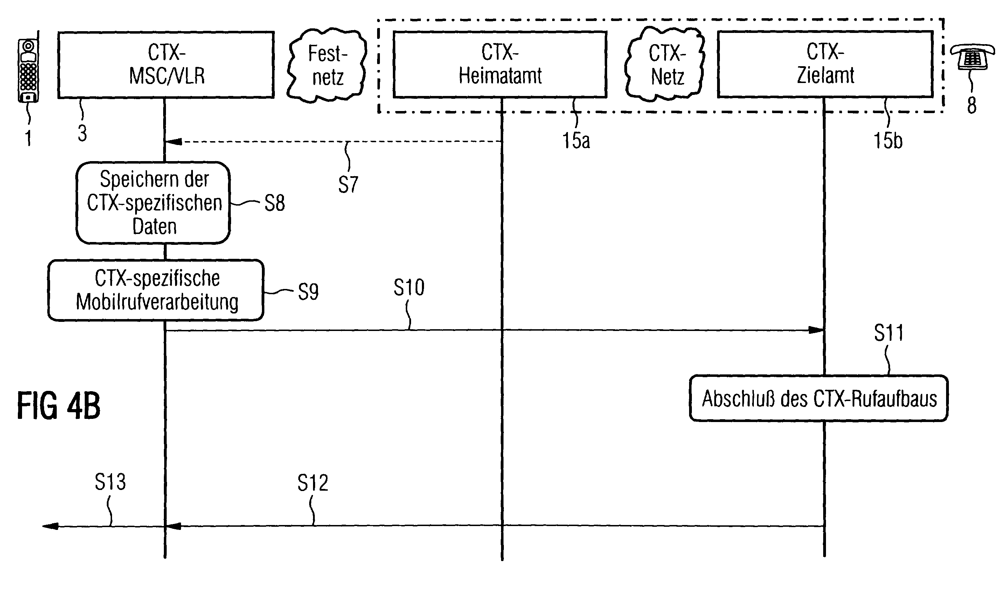

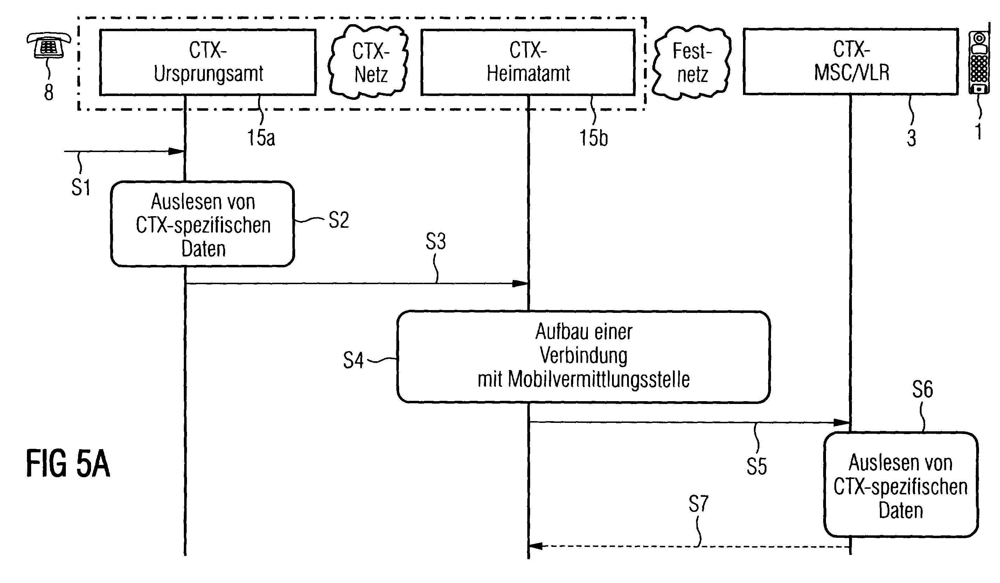

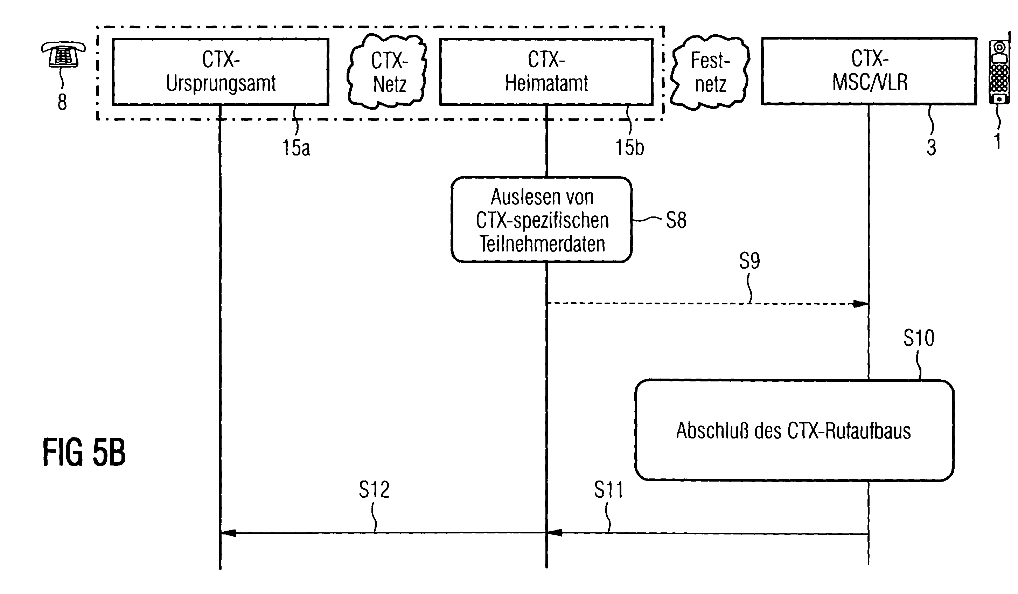

Die Vermittlung von CTX-Rufen zwischen einem mobilen CTX-Teilnehmer und einem stationären, d.h. verdrahteten, CTX-Teilnehmer gemäß der vorliegenden Erfindung, wird nachfolgend unter Bezugnahme auf Fig. 4 und Fig. 5 erläutert werden, wobei Fig. 4 den Fall darstellt, daß ein mobiler CTX-Teilnehmer einen verdrahteten CTX-Teilnehmer derselben CTX-Gruppe anruft, während in Fig. 5 der Fall dargestellt ist, daß ein verdrahteter CTX-Teilnehmer einen mobilen CTX-Teilnehmer derselben CTX-Gruppe anruft.

Wie in Fig. 4A gezeigt ist, erfolgt beispielsweise nach dem Einschalten des mobilen Telefongeräts 1 (Schritt S1) die Authentikation des mobilen Teilnehmers 1 gegenüber der entsprechenden Mobilvermittlungsstelle (mobile switching center MSC) 3, welcher die bereits zuvor erwähnte Besucherdatei (visitor location register VLR) zugeordnet ist (Schritt S2) . Nachfolgend wird davon ausgegangen, daß es sich bei dem realisierten Telefonvermittlungssystem um ein in Fig. 2 oder Fig. 3 dargestelltes System handelt, bei dem der VLR-Anteil der Mobilvermittlungsstelle um die Möglichkeit ergänzt worden ist, CTX-spezifische Daten aufzunehmen.

Demnach werden gemäß Fig. 4A nach der Authentikation CTX-spezifische Daten aus der Besucherdatei ausgelesen (Schritt S3), wobei diese CTX-spezifischen Daten beispielsweise eine CTX-Klassenmarkierung, einen CTX-Gruppen-ID mit einem CTX-Geschäftsgruppen-ID, die Rufnummer des rufenden mobilen CTX-Teilnehmers und insbesondere eine CTX-Festnetzvermittlungsstellenadresse umfassen können. Die Adresse der CTX-Festnetzvermittlungsstelle verweist auf eine bestimmte Festnetzvermittlungsstelle, die dem mobilen Teilnehmer 1 zugeordnet ist. Es wird somit anschließend ein Routing über die ausgelesene CTX-Festnetzvermittlungsstellenadresse durchgeführt (Schritt S4) und auf diese Weise die zuvor ausgelesenen CTX-spezifischen Daten an die (nachfolgend als CTX-Heimatamt) bezeichnete CTX-Festnetzvermittlungsstelle 15a übertragen. Anhand der dem CTX-Heimatamt 15a zugeführten CTX-spezifischen Daten wird auf die CTX-spezifischen Datenbasen 13 und 14 (vergleiche Fig. 1-3) des CTX-Heimatamts 15a zugegriffen und erneut bestimmte CTX-spezifische Daten ausgelesen (Schritte S5 und S6), um somit CTX-spezifische Ruf- und Teilnehmerdaten zu vermitteln, die unter anderem die Anrufart und die Adresse des dem gerufenen CTX-Teilnehmer 8 entsprechenden CTX-Zielamts 15b umfassen.

Während eines Schritts S7 werden anschließend, wie in Fig. 4B gezeigt ist, die ausgelesenen bzw. ausgewerteten CTX-spezifischen Daten von dem CTX-Heimatamt 15a zurück zu der Mobilvermittlungsstelle 3 übertragen, wobei diese übertragenen CTX-spezifischen Informationen die zuvor erwähnten Informationen enthalten und zusätzlich bestimmte CTX-Funktionen spezifizieren, welche für die beteiligten Teilnehmer bzw. für die ermittelte Anrufart zur Verfügung stehen (beispielsweise Rufumleitung etc.). Diese Informationen werden anschließend in der temporären CTX-spezifischen Mobilteilnehmer-Datenbasis 17 (d.h. in der Besucherdatei (VLR)) der Mobilvermittlungsstelle 3 gespeichert und von der CTX-spezifischen Steuerung 16 der CTX-Ruf vorbereitet, wobei beispielsweise der CTX-Verkehr und der anzuwendende CTX-Gebührensatz für das Gespräch ermittelt werden (Schritt S9) . Anschließend wird anhand der zuvor übertragenen Adresse des dem gerufenen CTX-Teilnehmer 8 zugeordneten CTX-Zielamts 15b das CTX-Zielamt 15b angewählt und die für den Aufbau der CTX-Verbindung erforderlichen Informationen übertragen (Schritt S10) . Auf der Seite des CTX-Zielamts 15b wird der CTX-Rufaufbau zu dem angewählten verdrahteten CTX-Teilnehmer 8 innerhalb derselben CTX-Gruppe abgeschlossen (Schritt S11), und eine Bestätigungsmeldung an die Mobilvermittlungsstelle 3 zurückgesendet (Schritt S12), die anschließend den mobilen CTX-Teilnehmer 1 durchschaltet (Schritt S13) oder im Fehlerfalle eine Fehlermeldung an den mobilen CTX-Teilnehmer 1 ausgibt.

Der in Fig. 5A und 5B gezeigte Ablauf für den Anruf eines mobilen CTX-Teilnehmers 1 durch einen verdrahteten oder stationären CTX-Teilnehmer 8 derselben CTX-Gruppen entspricht im wesentlichen dem zuvor anhand Fig. 4A und 4B erläuterten Ablauf, jedoch mit der Ausnahme, daß nunmehr die Ablaufrichtung entgegengesetzt ist. Nach dem Abheben des Telefonhörers und der Wahl der Rufnummer des gewünschten mobilen CTX-Teilnehmers am stationären CTX-Teilnehmerendgerät 8 (Schritt S1) werden aus den CTX-spezifischen Datenbasen des dem rufenden CTX-Teilnehmer 8 zugeordneten CTX-Ursprungsamt 15a, welches durch eine Festnetzvermittlungsstelle gebildet ist, CTX-spezifische Informationen ausgelesen, welche insbesondere die Anrufart, die öffentliche Rufnummer des gewünschten CTX-Teilnehmers, die interne Gruppennummer des gewünschten CTX-Teilnehmers und die Adresse des dem gerufenen mobilen CTX-Teilnehmers 1 zugeordneten CTX-Heimatamts 15b umfassen (Schritt S2) . Anschließend wird das CTX-Heimatamt 15b, welches durch die ausgelesenen CTX-spezifischen Informationen spezifiziert wird, angewählt und die CTX-spezifischen Informationen an das CTX-Heimatamt 15b übertragen (Schritt S3). Anhand der übermittelten CTX-spezifischen Informationen sowie gegebenenfalls aus den CTX-spezifischen Datenbasen des CTX-Heimatamts 15b ausgelesenen Informationen wird anschließend von dem CTX-Heimatamt 15b eine Verbindung zu der dem gerufenen mobilen CTX-Teilnehmer 1 zugeordneten Mobilvermittlungsstelle 3 aufgebaut (Schritt S5) und die erforderlichen CTX-spezifischen Informationen übertragen. Auf der Seite der Mobilvermittlungsstelle 3 wird auf die in der Besucherdatei (VLR) 17 (vergleiche Fig. 2) oder Fig. 3 gespeicherten CTX-spezifischen Daten zugegriffen (Schritt S6), um somit die entsprechende CTX-Klassenmarkierung, den CTX-Gruppen-ID und CTX-Geschäftsgruppen-ID usw. des gerufenen Teilnehmers zu ermitteln, die anschließend zu dem CTX-Heimatamt 15b übertragen werden (Schritt S7).

Wie in Fig. 5B gezeigt ist, kann anschließend aufgrund der von der Mobilvermittlungsstelle 3 erhaltenen CTX-spezifischen Daten auf die entsprechenden Teilnehmer- und Gruppendaten der CTX-spezifischen Datenbasen 13, 14 (vergleiche Fig. 1-3) des CTX-Heimatamts 15b zugegriffen werden, um diese auszulesen. Die somit vorliegenden Informationen bezeichnen beispielsweise die für den Anrufer oder gerufenen Teilnehmer sowie die Anrufart zur Verfügung stehenden CTX-Funktionen, die an die Mobilvermittlungsstelle 3 übertragen werden (Schritt S9), die schließlich eine Mobilfunkverbindung zu dem gerufenen mobilen CTX-Teilnehmer 1 aufbauen kann (Schritt S10) und eine entsprechende Bestätigung an das CTX-Heimatamt 15b zurücksendet (Schritt S11), welche an das CTX-Ursprungsamt 15b und damit an den rufenden CTX-Teilnehmer 8 weitergereicht wird (Schritt S12).

Sowohl für die in Fig. 4 als auch für die in Fig. 5 dargestellten Abläufe gilt, daß die CTX-Festnetzvermittlungsstellen bzw. CTX-Ämter 15a und 15b durch ein und dasselbe Vermittlungsamt gebildet sein können.

## Patentansprüche

1. Telefonvermittlungssystem,
wobei bestimmte mobile und verdrahtete Teilnehmer (1, 8) des Telefonvermittlungssystems als CENTREX(CTX)-Teilnehmer definiert sind, welche zu wenigstens einer CTX-Gruppe zusammengefaßt sind, innerhalb der CTX-Verbindungen aufgebaut werden können,
mit mindestens einer Festnetzvermittlungsstelle (15), welcher verdrahtete CTX-Teilnehmer (8) zugeordnet sind,
mit mindestens einer Mobilvermittlungsstelle (3), welcher mobile CTX-Teilnehmer (1) zugeordnet sind, und
mit Speichermitteln (13, 14, 17, 18) zum Speichern von CTX-spezifischen Daten der CTX-Teilnehmer (1, 8),
wobei die Festnetzvermittlungsstelle (15) Steuermittel (10) zum Steuern des Aufbaus einer CTX-Verbindung über die Festnetzvermittlungsstelle (15) zwischen einem verdrahteten CTX-Teilnehmer (8) und einem anderen CTX-Teilnehmer auf Grundlage von in den Speichermitteln (13, 14, 17, 18) gespeicherten CTX-spezifischen Daten umfaßt,
wobei die Festnetzvermittlungsstelle (15) und die Mobilvermittlungsstelle (3) jeweils eine Datenschnittstelle zur Übertragung von CTX-spezifischen Daten zwischen der Festnetzvermittlungsstelle (15) und der Mobilvermittlungsstelle (3) aufweisen, und
wobei die Mobilvermittlungsstelle (3) Steuermittel (16) zum Steuern des Aufbaus einer CTX-Verbindung zwischen einem mobilen CTX-Teilnehmer (1) und einem anderen CTX-Teilnehmer umfaßt.

2. Telefonvermittlungssystem nach Anspruch 1,
**dadurch gekennzeichnet**,
daß die Festnetzvermittlungsstelle (15) Speichermittel (13, 14), in denen CTX-spezifische Daten der mobilen und verdrahteten CTX-Teilnehmer (1, 8) gespeichert sind, umfaßt,
daß die Steuermittel (16) der Mobilvermittlungsstelle (3) derart ausgestaltet sind, daß sie zum Aufbauen einer CTX-Verbindung zwischen einem mobilen CTX-Teilnehmer (1) und einem anderen CTX-Teilnehmer über die Datenschnittstellen von der Festnetzvermittlungsstelle (15) CTX-spezifische Daten anfordern, und
daß die Steuermittel (10) der Festnetzvermittlungsstelle (15) derart ausgestaltet sind, daß sie bei Vorliegen einer Anforderung von der Mobilvermittlungsstelle (3) die angeforderten CTX-spezifischen Daten aus den Speichermitteln (13, 14) auslesen und über die Datenschnittstellen an die Mobilvermittlungsstelle (3) übertragen, so daß die Steuermittel (16) der Mobilvermittlungsstelle (3) auf Grundlage der übertragenen CTX-spezifischen Daten die CTX-Verbindung zusammen mit den Steuermitteln (10) der Festnetzvermittlungsstelle (15) aufbauen können.

3. Telefonvermittlungssystem nach Anspruch 2,
**dadurch gekennzeichnet**,
daß die Steuermittel (16) der Mobilvermittlungsstelle (3) derart ausgestaltet sind, daß sie zum Aufbauen einer CTX-Verbindung zwischen einem mobilen CTX-Teilnehmer (1) und einem anderen CTX-Teilnehmer über die Datenschnittstellen von der Festnetzvermittlungsstelle (15) die CTX-spezifischen Daten begleitend zu der Aufenthaltsregistrierung des mobilen CTX-Teilnehmers (1) anfordern.

4. Telefonvermittlungssystem nach Anspruch 2 oder 3,
**dadurch gekennzeichnet**,
daß die Mobilvermittlungsstelle (3) Speichermittel (17) zum Speichern der angeforderten und über die Datenschnittstellen von der Festnetzvermittlungsstelle (15) übertragenen CTX-spezifischen Daten umfassen,
wobei die Steuermittel (16) der Mobilvermittlungsstelle (3) zum Aufbauen der CTX-Verbindung auf die in den Speichermitteln (17) der Mobilvermittlungsstelle (3) gespeicherten CTX-spezifischen Daten zugreifen.

5. Telefonvermittlungssystem nach Anspruch 4,
**dadurch gekennzeichnet**,
daß die Speichermittel (17) der Mobilvermittlungsstelle (3) in der Besucherdatei (VLR) der Mobilvermittlungsstelle (3) ausgebildet sind.

6. Telefonvermittlungssystem nach einem der vorhergehenden Ansprüche,
**dadurch gekennzeichnet**,
daß die in den Speichermitteln (13, 14, 17, 18) gespeicherten CTX-spezifischen Daten CTX-spezifische Teilnehmerinformationen der einzelnen CTX-Teilnehmer (1, 8) und/oder CTX-spezifische Gruppeninformationen der einzelnen CTX-Gruppen umfassen.

7. Telefonvermittlungssystem nach Anspruch 1,
**dadurch gekennzeichnet**,
daß die Speichermittel eine erste Datenbasis (13, 14) in der Festnetzvermittlungsstelle (15) und eine zweite Datenbasis (18) in der Mobilvermittlungsstelle (3) umfassen, wobei die zweite Datenbasis (18) der Mobilvermittlungsstelle (3) CTX-spezifische Daten der mobilen CTX-Teilnehmer (1) speichern, und
daß die Steuermittel (16) der Mobilvermittlungsstelle (3) zum Aufbauen einer CTX-Verbindung zwischen einem mobilen CTX-Teilnehmer (1) und einem anderen CTX-Teilnehmer auf die in der zweiten Datenbasis (18) gespeicherten CTX-spezifischen Daten zugreift und auf Grundlage dieser Daten über die Datenschnittstelle mit der zuständigen Festnetzvermittlungsstelle (15) kommuniziert.

8. Telefonvermittlungssystem nach Anspruch 7,
**dadurch gekennzeichnet**,
daß die in der zweiten Datenbasis (18) gespeicherten CTX-spezifischen Daten Informationen über die CTX-Gruppen der mobilen CTX-Teilnehmer (1) und/oder Informationen über die für jeden mobilen CTX-Teilnehmer (1) zuständige Festnetzvermittlungsstelle (15) umfassen.

9. Telefonvermittlungssystem nach Anspruch 7 oder 8,
**dadurch gekennzeichnet**,
daß die zweite Datenbasis der Mobilvermittlungsstelle (3) in der Heimatdatei (HLR) der Mobilvermittlungsstelle (3) ausgebildet ist.

10. Telefonvermittlungssystem nach einem der Ansprüche 7 - 9,
**dadurch gekennzeichnet**,
daß die Mobilvermittlungsstelle (3) temporäre Speichermittel (17) zum Speichern von aus der zweiten Datenbasis (18) auszulesenden CTX-spezifischen Daten aufweist, wobei die Steuermittel (16) der Mobilvermittlungsstelle (3) zum Aufbauen einer CTX-Verbindung zwischen einem mobilen CTX-Teilnehmer (1) und einem anderen CTX-Teilnehmer auf die temporären Speichermittel (17) zugreifen.

11. Telefonvermittlungssystem nach Anspruch 10,
**dadurch gekennzeichnet**,
daß die temporären Speichermittel (17) in der Besucherdatei (VLR) der Mobilvermittlungsstelle (3) ausgebildet sind.
